(19) Europäisches Patentamt
European Patent Office
Office européen des brevets

(11) Veröffentlichungsnummer: **0 475 012 A1**

(12) # EUROPÄISCHE PATENTANMELDUNG

(21) Anmeldenummer: **91111491.6**

(22) Anmeldetag: **10.07.91**

(51) Int. Cl.5: **C08G 18/10**, C08G 18/28, C08G 18/32, C08G 18/80, C08G 18/79, C08G 18/75, C09D 175/04

(30) Priorität: **06.09.90 DE 4028284**

(43) Veröffentlichungstag der Anmeldung:
**18.03.92 Patentblatt 92/12**

(84) Benannte Vertragsstaaten:
**AT BE CH DE FR GB IT LI NL**

(71) Anmelder: **HÜLS AKTIENGESELLSCHAFT**
**Patentabteilung / PB 15 - Postfach 13 20**
**W-4370 Marl 1(DE)**

(72) Erfinder: **Gras, Rainer, Dr.**
**Im Ostholz 49 a**
**W-4630 Bochum 5(DE)**
Erfinder: **Wolf, Elmar, Dr.**
**Stauffenbergstrasse 7**
**W-4350 Recklinghausen(DE)**

(54) **Lichtbeständige, reaktive 2 K-PUR-Lacke, die bei Raumtemperatur härten.**

(57) Die Erfindung betrifft lichtbeständige, reaktive 2 K-PUR-Lacke, die bei Raumtemperatur härten, bestehend aus

a) mittels bestimmten sterisch gehinderten Piperidinderivaten blockierten Isocyanat-Präpolymeren

und

b) aliphatischen, (cyclo)-aliphatischen Polyaminen und/oder Aminoamiden, wobei pro Aminogruppe 1-1,4 blockierte NCO-Gruppen umgesetzt sind.

EP 0 475 012 A1

Die vorliegende Erfindung betrifft neue lichtbeständige, bei Raumtemperatur härtende 2 K-PUR-Lacke auf Basis blockierter (cyclo)-aliphatischer Polyisocyanate und Polyaminen.

Es ist bekannt, daß Polyamine mit Polyisocyanaten so schnell reagieren, daß sie nicht verarbeitbar sind, wenn duroplastische PUR-Massen gebildet werden. Dagegen lassen sich Diamine mit Diisocyanaten zu thermoplastischen PUR-Massen entweder in Lösung oder in der Schmelze ohne Schwierigkeiten verarbeiten. Bei den zuletzt genannten thermoplastisch verarbeitbaren PUR-Systemen werden durch Einführung von Harnstoffsegmenten die Eigenschaften der PUR-Elastomeren, vor allem Schlagzähigkeit, Weiterreißfestigkeit und Zugfestigkeit, verbessert.

Wie bereits angeführt, ist es also nicht möglich, vernetzte PUR-Systeme, z. B. durch Reaktion eines Diamins mit einem Triisocyanat oder eines Polyamins mit einem Diisocyanat, herzustellen.

In der DE-OS 10 86 372 wurden erstmals Überzugsmittel bzw. Reaktionslacke vorgestellt, deren Herstellung bei Raumtemperatur durch Reaktion eines Phenol-blockierten aromatischen Triisocyanats und eines Amidgruppen enthaltenden Diamins erfolgt:

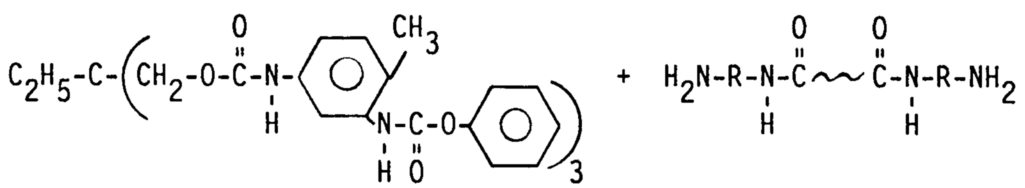

R: Alkylenrest

Voraussetzung für dieses Prinzip - Verminderung der NCO-Reaktivität gegenüber $NH_2$-Gruppen durch Blockierung der NCO-Gruppe - ist, daß das Blockierungsmittel nur so fest gebunden ist, daß es bereits bei Raumtemperatur durch Amine wieder verdrängt werden kann, wie dies für das Phenol als Blockierungsmittel zutrifft. Am Fatipec Kongreß 1980 (Fatipec-Kongreßbuch II, S. 293-306) wurden flexible vernetzte PUR-Elastomere vorgestellt, die man nach dem gleichen Prinzip - Verminderung der NCO-Reaktivität durch Blockierung - herstellt. Dabei wurde ein Nonylphenol blockiertes Isocyanataddukt aus 1 Mol Polypropylenethertriolund 3 Molen Toluylendiisocyanat mit einem Diamin, z. B. Laromin C 260(R) (3,3'-Dimethyl-4.4'-diaminodicyclohexylmethan) der Firma BASF bei Raumtemperatur im NCO : $NH_2$ = 1:1-Verhältnis umgesetzt.

Beiden durch eine NCO/$NH_2$-Reaktion vernetzten PUR-Systemen haftet der Nachteil an, daß sie nicht lichtbeständig sind, da es sich jeweils um aromatische Polyurethane handelt, die ja bekanntermaßen bei Bewitterung zur Verfärbung neigen. Diesen Nachteil der genannten aromatischen PUR-Systeme durch einfache Substitution des aromatischen Isocyanats durch ein (cyclo)-aliphatisches zu beseitigen - (cyclo)-aliphatische Polyurethane zeigen hervorragende Lichtbeständigkeit - ist nicht möglich, da Phenol-blockierte (cyclo)-aliphatische NCO-Gruppen bei Raumtemperatur mit Aminen nicht - oder nur in unzureichendem Maße - reagieren.

Aufgabe der vorliegenden Erfindung ist somit das Finden von geeigneten blockierten Polyisocyanaten für lichtbeständige, bei Raumtemperatur härtende 2 K-PUR-Lacke, wobei die Härtung über eine NCO/$NH_2$-Reaktion erfolgen soll.

Diese Aufgabe konnte dadurch gelöst werden, daß für die mit Polyaminen umzusetzenden NCO-Präpolymeren solche auf Basis (cyclo)-aliphatischer Isocyanate mit speziellen Piperidin-Derivaten als Blockierungsmittel verwendet werden.

Gegenstand der Erfindung sind daher lichtbeständige, reaktive 2 K-PUR-Lacke, die bei Raumtemperatur härten, bestehend aus

a) mittels Piperidin-Derivaten der folgenden allgemeinen Formeln blockierten Isocyanat-Präpolymeren

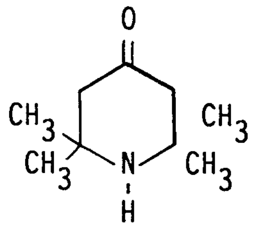 (A) oder 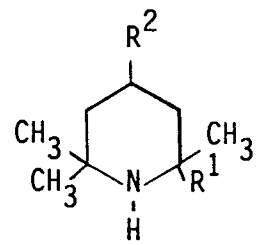 (B)

wobei
$R^1$ = H, $CH_3$
$R^2$ =

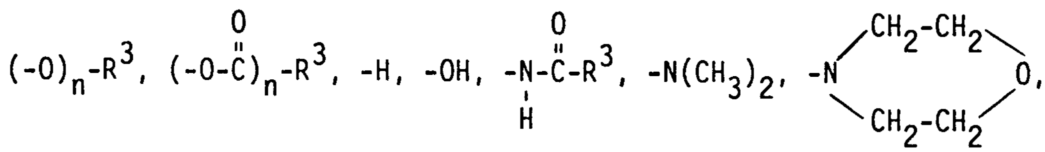

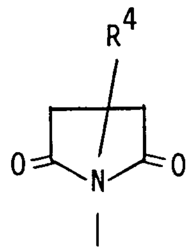 , 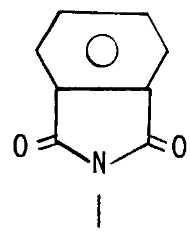 , 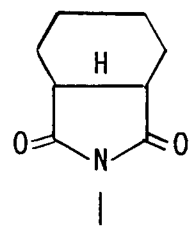 ,

n = 1,2
$R^3$ = $C_1$-$C_{18}$-Alkyl, wenn n = 1 und
$R^3$ = $C_2$-$C_{18}$-Alkylen, wenn n = 2
$R^4$ = H, $C_1$-$C_{20}$-Alkyl
und
b) aliphatischen, (cyclo)-aliphatischen Polyaminen und/oder Aminoamiden, wobei pro Aminogruppe 1-1,4 blockierte NCO-Gruppen umgesetzt sind.

Für die einzusetzenden Piperidin-Derivate als Blockierungsmittel ist es zwingend notwendig, daß die sekundäre Ringaminogruppe von mindestens drei $CH_3$-Gruppen in α-Stellung umgeben wird. Während also z. B. 2,2,6-Trimethylpiperidin zur Herstellung der erfindungsgemäßen Verbindungen gut geeignet ist, kommt dagegen 2,6-Dimethylpiperidin zur Blockierung von NCO-Präpolymeren nach der Erfindung nicht infrage.

Sterisch gehinderte Amine sind an und für sich als Blockierungsmittel für Isocyanate bekannt. Sie werden als Blockierungsmittel zur Herstellung von bei Raumtemperatur lagerstabilen aber erst in der Hitze härtbaren 1 K-PUR-Einbrennlacken auf Basis Polyisocyanat und hydroxylhaltiger Polyester beschrieben (DE-OS 32 21 558).

Dagegen war es bisher nicht bekannt, reaktive lichtbeständige, bei Raumtemperatur härtende 2 K-PUR-Systeme auf Basis (cyclo)-aliphatischer Polyisocyanate und Polyamine herzustellen. Alle bisher bekannten 2 K-PUR-Systeme auf Basis blockierter (cyclo)-aliphatischer Polyisocyanate und Polyamine benötigen zur Härtung Wärme, wie dies z. B. in den DE-OSS 29 02 090, 31 20 596, 32 39 000, beschrieben wird.

Bei den erfindungsgemäß einzusetzenden blockierten Polyisocyanaten handelt es sich um Verbindungen, deren blockierter NCO-Gehalt 2-12 %, vorzugsweise 5-8 %, beträgt und die ein Molgewicht von ca. 500-5 000, vorzugsweise 2 000-3 000, haben. Während die Isocyanatpräpolymeren auf Basis Polyesterpolyolen in Lösung verarbeitet werden müssen, ist bei solchen auf Polyetherpolyolbasis eine lösungsmittelfreie Verarbeitung möglich. Die Herstellung blockierter Polyisocyanate erfolgt in zwei Stufen, wobei in der 1. Stufe das NCO-Präpolymere aus Polyesterpolyolen bzw. Polyetherpolyolen und (cyclo)-aliphatischen Diisocyanaten im NCO:OH-Äquivalenzverhältnis 2:1 in bekannter Weise hergestellt wird. In einem 2. Schritt wird dann zu dem auf 60-100 °C erhitzten NCO-Präpolymeren das Piperidin-Derivat so zudosiert, daß pro NCO-Äquivalent ein NH-Äquivalent zur Reaktion kommt. In manchen Fällen hat es sich als vorteilhaft erwiesen,

wenn pro NCO-Äquivalent mehr als 1 NH-Äquivalent Piperidinderivat, bevorzugt 1,2-1,4, zur Reaktion gebracht werden. Die Reaktionskomponenten werden solange bei 60-100 °C erhitzt, bis der NCO-Gehalt der Reaktionsmischung < 0,3 % beträgt. Für die erfindungsgemäßen Lacke kommen im Prinzip alle (cyclo)-aliphatischen Diisocyanate infrage, in praxi werden aber bevorzugt Isophorondiisocyanat und Hexamethylendiisocyanat eingesetzt. Die Diisocyanate können selbstverständlich auch in dimerer oder trimerer Form, als Uretdione, Isocyanurate, Carbodiimide, Harnstoffe bzw. Biurete eingesetzt werden.

Bei den zur Herstellung der NCO-Präpolymeren eingesetzten Polyesterpolyolen handelt es sich um Kondensationsprodukte aus Dicarbonsäuren und Polyolen, die durch Polykondensation, z. B. von Adipinsäure, Trimethyladipinsäure, Phthalsäure, Isophthalsäure, Terephthalsäure mit Ethylenglykol, Butandiol, Diethylenglykol, Triethylenglykol, Hexandiol, Neopentylglykol, 1,1,1-Trimethylolpropan, hergestellt werden. Ferner können die Polyesterpolyole auch Polymerisationsprodukte des Caprolactons sein. Auch OH-Gruppen enthaltende Polymerisationsprodukte werden zur Herstellung des NCO-Präpolymeren eingesetzt. Es sind dies z. B. Polyalkylenetherpolyole, die durch anionische Polymerisation, Copolymerisation und Blockcopolymerisation von Ethylenoxiden, wie Ethylenoxid, Propylenoxid, Butylenoxid mit bi- oder polyfunktionelen Alkoholen, wie Butandiol, 1,1,1-Trimethylolpropan, Hexantriol-1,2,6, Pentaerythrit oder mit Aminen, Methylamin, Ethylendiamin, als Starterkomponente hergestellt werden, oder durch anionische Polymerisation und Copolymerisation cyclischer Ether, wie Tetrahydrofuran, Ethylenoxid und Propylenoxid, mit sauren Katalysatoren, wie z. B. Bortrifluoridätherat. Von den Piperidinderivaten als Blockierungsmittel sind folgende besonders gut geeignet: 2,2,4,6-Tetramethylpiperidin, 2,2,6,6-Tetramethylpiperidin-Kondensationsprodukte aus 4-Hydroxy-2,2,6,6-tetramethylpiperidin und Monocarbonsäuren mit mindestens 6 C-Atomen, aus 4-Amino-2,2,6,6-tetramethylpiperidin und Monocarbonsäuren mit mindestens 6 C-Atomen.

Die bekanntesten Vertreter der 2 K-PUR-Lacke auf Basis (cyclo)-aliphatischer Isocyanate sind die sogenannten DD-Lacke, die überall dort eingesetzt werden, wo an den Lack höchste Anforderungen gestellt werden. Da sie bei Raumtemperatur zu langsam härten, werden sie bei industriellen Lackierungen forciert, d. h. bei ca. 80-120 °C 20-30 Minuten gehärtet. Die erfindungsgemäßen 2 K-PUR-Lacke zeigen dagegen sogar bei Raumtemperatur eine schnelle Durchhärtung; so sind sie z. B. als Filme bereits nach 20 Minuten staubtrocken. Als NCO-Komponente des 2 K-PUR-Lacks kommen vor allem die blockierten Polyisocyanate infrage, in denen ein (cyclo)-aliphatisches Diisocyanat mit einem Polyesterpolyol im NCO:OH-Äquivalenzverhältnis von 2:1 umgesetzt wurde. Als Polyaminkomponente kommen grundsätzlich alle Diamine, speziell aber Isophorondiamin (IPD) 2,2,4/2,4,4-Trimethylhexamethylendiamin (TMD) und LAROMIN C 260(R), infrage. Weitere geeignete Amine sind Ethylendiamin, Hexamethylendiamin, 1,3- bzw. 1,2-Diaminopropan, Neopentandiamin, 4,4'-Diaminodicyclohexylmethan, 4,9-Dioxadodecan-1,12-diamin, Diethylentriamin, Dipropylentriamin. Das Polyamin kann auch ein Aminoamid sein, das durch Kondensation eines Diamins mit einer Dicarbonsäure im Molverhältnis (n+1):n, wobei n = 1-4 sein kann, in bekannter Weise hergestellt wurde.

Zur Herstellung der erfindungsgemäßen 2 K-PUR-Lacke werden die Komponenten - das blockierte Polyisocyanat und das (cyclo)-aliphatische Polyamin - gegebenenfalls in inerten Lösungsmitteln, wie Toluol, Xylol, Ethylenglykolacetat, Methoxypropylacetat, gegebenenfalls mit Pigmenten im $NCO:NH_2$-Verhältnis von 1-1,4:1 gemischt und in bekannter Weise auf gereinigte und vorbehandelte Bleche appliziert und bei Raumtemperatur gehärtet. Die erhaltenen Lackfilme besitzen die von den 2 K-PUR-Lacken her bekannten hervorragenden lacktechnischen Eigenschaften.

Die Erfindung wird durch nachstehende Beispiele erläutert.

**A I. Allgemeine Herstellungsvorschrift für das erfindungsgemäß einzusetzende Isocyanat-Präpolymere**

Die blockierten NCO-Präpolymeren werden in zwei Stufen hergestellt. In der 1. Stufe erfolgt die Herstellung des NCO-Präpolymeren durch Reaktion des Polyols mit dem Diisocyanat im OH:NCO-Verhältnis von 1:1,8-2,5, bevorzugt 1:2; dabei werden die Komponenten bei 80 °C so lange miteinander erhitzt, bis der NCO-Gehalt den berechneten Wert erreicht hat. Danach erfolgt in der 2. Stufe die Zugabe des Tetramethylpiperidin-Derivats (bei 80 °C). Nach beendeter Blockierungsmittelzugabe wird das Reaktionsgemisch so lange bei 80 °C weiter erhitzt, bis der NCO-Gehalt < 0,3 % beträgt.

**B Herstellung von 2 K-PUR-Lacken**

I. Herstellung der erfindungsgemäß blockierten Isocyanat-Präpolymeren

Beispiel 1

540 Gew.-T. eines OH-Endgruppen aufweisenden Polyesters aus 1 Mol Trimethylolpropan, 6 Mol Hexandiol, 5 Mol Phthalsäureanhydrid und 1 Mol Adipinsäure mit einer OH-Zahl von 101-104 mg KOH/g wurden mit 222 Gew.-T. Isophorondiisocyanat (IPDI) in 326 Gew.-T. Butylacetat/SOLVESSO(R) 100 (Gewichtsverhältnis 2:1) so lange bei 80 °C erhitzt, bis der NCO-Gehalt des Reaktionsgemisches ca. 3,8 % betrug. Danach wurden 141 Gew.-T. 2,2,4,6-Tetramethylpiperidin portionsweise zugegeben und bei 80 °C so lange weitererhitzt, bis der NCO-Gehalt < 0,3 % betrug. Die Viskosität des Reaktionsproduktes betrug bei 25 °C 57 000 mPa•s.

Beispiel 2

249 Gew.-T. eines OH-Endgruppen aufweisenden Polyesters aus 2 Mol Trimethylolpropan, 5 Mol Hexandiol, 3 Mol Phthalsäureanhydrid und 2 Mol Adipinsäure mit einer OH-Zahl von 225-229 mg KOH/g wurden mit 222 Gew.-T. IPDI in 202 Gew.-T. Butylacetat/SOLVESSO(R) 100 so lange bei 80 °C erhitzt, bis der NCO-Gehalt der Reaktionsmischung 6,2 % erreicht hatte. Danach wurde 141 Gew.-T. 2,2,6,6-Tetramethylpiperidin portionsweise zugegeben und bei 80 °C so lange weitererhitzt, bis der NCO-Gehalt < 0,3 % betrug. Die Viskosität des Reaktionsproduktes betrug bei 25 °C 180 000 mPa•s.

Beispiel 3

195 Gew.-T. des trimeren Hexamethylendiisocyanats (Isocyanurat des Hexamethylendiisocyanats) wurden in einem Gemisch aus 146 Gew.-T. SOLVESSO(R) 100 und 87 Gew.-T. Butylacetat mit 155 Gew.-T. Triacetonamin entsprechend Beispiel 1 umgesetzt. Das Reaktionsprodukt hatte bei 25 °C eine Viskosität von 870 mPa•s und einen blockierten NCO-Gehalt von 7,2 %.

II. Herstellung der 2 K-PUR-Lacke

Das blockierte NCO-Präpolymere wurde mit dem Diamin im Äquivalenzverhältnis gemischt und nach einer Reifezeit von ca. 10 Minuten auf entfettete Stahlbleche aufgetragen und bei Raumtemperatur gehärtet.

Tabelle: Zusammensetzung der 2 K-PUR-Lacke

| Beispiel-Nr. | Zusammensetzung des 2 K-PUR-Lackes | | Lacktechnische Eigenschaften nach Härtung bei Raumtemperatur und 7 Tagen | | | | | | | |
|---|---|---|---|---|---|---|---|---|---|---|
| | Blockiertes Isocyanat-Präpolymeres | Amin | TZ | SD | HK1 | HK3 | HK7 | GS | ET | Imp. rev. |
| 1 | I.1 (≙ NCO-Präpolymer mit 3,8 % NCO block. mit 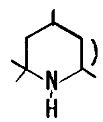 ) | IPD | ca.50 | 50-80 | 30 | 38 | 43 | 2 | >10 | >944,6 |
| 1a (Vergleich) | (≙ NCO-Präpolymer mit 3,8 % NCO ohne " | IPD | geliert, nicht verarbeitbar | | | | | | | |
| 2 | I.1 | TMD | ca.45' | 50-90 | 15 | 19 | 27 | 0 | >10 | >944,6 |
| 3 | I.1 | LAROMIN C 260 | ca.60 | 50-70 | 42 | 46 | 50 | 0 | >10 | >944,6 |
| 4 | I.3 | IPD | ca.25 | 75-90 | 14 | 28 | 29 | 0 | >10 | >944,6 |
| 5 | I.3 | TMD | ca.18 | 60-80 | 10 | 11 | 14 | 0 | >10 | >944,6 |
| 6 | I.3 | LAROMIN C 260 | ca.30 | 50-75 | 20 | 38 | 41 | 0 | >10 | >944,6 |

Erklärung zur Tabelle:

Das blockierte Isocyanat-Präpolymer und Amin werden im $NCO_{block}$ : $NH_2$-Äquivalenzverhältnis von 1:1 gemischt.

| | |
|---|---|
| TZ: | Topfzeit in min |
| SD: | Schichtdicke in µm |
| HK1,3,7: | Härte nach König in sec (DIN 53 157) nach 1, 3, 7 Tagen |
| ET: | Tiefung nach Erichsen in mm (DIN 53 156) |
| GS: | Gitterschnittprüfung (DIN 53 151) |
| Imp. rev.: | Impact reverse in g • m |

| | |
|---|---|
| TMD: | 2,2,4/2,4,4-Trimethylhexamethylendiamin Verkaufsprodukt der Hüls AG) |
| IPD: | Isophorondiamin (Verkaufsprodukt der Hüls AG) |
| LAROMIN(R) C 260: | 3,3'-Dimethyl-4,4'diaminodicyclohexylmethan (Verkaufsprodukt der BASF AG) |
| SOLVESSO(R) 100 | (Aromatengemisch, Siedegrenzen: 163-181 °C) |

## Patentansprüche

**1.** Lichtbeständige, reaktive 2 K-PUR-Lacke, die bei Raumtemperatur härten, bestehend aus

a) mittels Piperidinderivaten der folgenden allgemeinen Formeln blockierten Isocyanat-Präpolymeren:

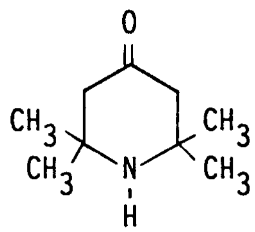 (A) oder 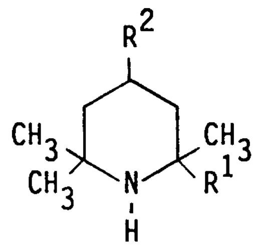 (B)

wobei $R^1$ = H, $CH_3$
$R^2$ =

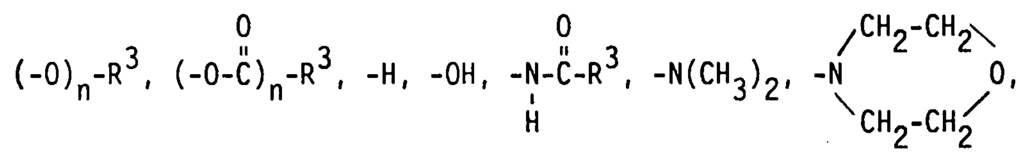

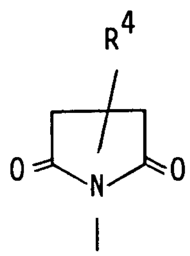 , 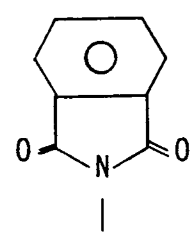 , 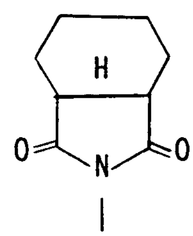 ,

n = 1,2
$R^3$ = $C_1$-$C_{18}$-Alkyl, wenn n = 1 und
$R^3$ = $C_2$-$C_{18}$-Alkylen, wenn n = 2
$R^4$ = H, $C_1$-$C_{20}$-Alkyl
und

b) aliphatischen, (cyclo)-aliphatischen Polyaminen und/oder Aminoamiden, wobei pro Aminogruppe 1-1,4 blockierte NCO-Gruppen umgesetzt sind.

**2.** 2 K-PUR-Lacke nach Anspruch 1,
dadurch gekennzeichnet,
daß die (cyclo)-aliphatischen Diisocyanate Isophorondiisocyanat und Hexamethylendiisocyanat sind.

Europäisches Patentamt

# EUROPÄISCHER RECHERCHENBERICHT

Nummer der Anmeldung

**EP 91 11 1491**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 096 210 (CHEMISCHE WERKE HÜLS)<br>* Anspruch 1 * * * Seite 3, Zeile 20 - Seite 5, Zeile 29 * *<br>– – – | 1 | C 08 G 18/10<br>C 08 G 18/28<br>C 08 G 18/32 |
| D | EP-A-0 096 210 (& DE-A-3 221 558)<br>– – – | | C 08 G 18/80<br>C 08 G 18/79 |
| A | FR-A-2 364 935 (BAYER)<br>* Ansprüche 1-4 * * * Beispiel 9 * *<br>– – – – – | 1 | C 08 G 18/75<br>C 09 D 175/04 |

| RECHERCHIERTE SACHGEBIETE (Int. Cl.5) |
|---|
| C 08 G |

Der vorliegende Recherchenbericht wurde für alle Patentansprüche erstellt

| Recherchenort | Abschlußdatum der Recherche | Prüfer |
|---|---|---|
| Den Haag | 07 Januar 92 | VAN PUYMBROECK M.A. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument